# EUROPEAN PATENT APPLICATION

(11) **EP 1 978 589 A1**
(43) Date of publication of application: **08.10.2008**
(21) Application number: 07707475.5
(22) Date of filing: 26.01.2007
(51) Int. Cl.: H01M 10/48, H01M 2/10, H01M 2/20, H01M 2/30

(54) **BATTERY PACK**

(30) Priority: 27.01.2006 JP 2006019081
(71) Applicant: Kabushiki Kaisha Toshiba, Minato-ku, Tokyo 105-8001 (JP)
(72) Inventor: KOSUGI, Shinichiro, Toshiba Corporation 1-1, Shibaura 1Chome, Minato-Ku Tokyo 105-8001 (JP); OZAKI, Tamon, Toshiba Corporation 1-1, Shibaura 1Chome, Minato-Ku Tokyo 105-8001 (JP); ARAOKA, Katsumasa, Toshiba Corporation 1-1, Shibaura 1Chome, Minato-Ku Tokyo 105-8001 (JP)
(74) Representative: Kramer - Barske - Schmidtchen
(86) International application number: PCT/JP2007/051243
(87) International publication number: WO 2007/086495

(57) **Abstract**

Negative (-) terminals and positive (+) terminals of a plurality of cells in a connected state are housed in a metal case. The metal case is attached with positive-side and negative-side external terminals, and the external terminals and cell terminals are connected with each other through lead wires. The metal case is attached with a voltage monitoring connector, and the voltage monitoring connector and a voltage taking electric wires extending from the positive and negative sides of the respective cells are connected with each other. Through the voltage monitoring connector, the charging degrees of the individual cells can be obtained, thereby preventing the cells from being overcharged.

## Description

### Technical Field

The present invention relates to a battery pack housing a plurality of cells in a case, and in particular, relates to a battery pack having a voltage monitoring connector for monitoring voltages of the cells sealed in the case.

### Background Art

As a battery pack housing a plurality of cells in a case, there have been such conventionally known battery packs as disclosed in Patent Publication 1 (Japanese Patent Application Laid-Open No. 2004-146161) and Patent Publication 2 (Japanese Patent Application Laid-Open No. 2004-55346).
The Patent Publication 1 has proposed a technique of a battery pack that prevents vibration of cells by disposing an elastic material between cells and a case.
The Patent Publication 2 has proposed a battery pack structured so as to house a plurality of cells in a case and to dispose gel adhesive or a rubber seat between the cells and the case.

Patent Publication 3 (Japanese Patent Application Laid-Open No. 2001-68074) has proposed a technique of a battery pack which houses a plurality of cells in a case constituted by a sheet-shaped member having a gas barrier layer to inhibit liquid leakage and gas invasion in use of a lithium ion secondary battery as a cell.

However, conventional battery packs constructed as described above have some problems to be solved. That is, the battery pack as proposed in the Patent Publications has such a drawback that, where a lithium ion secondary battery is used as a cell housed in the battery pack, the cell possibly bursts due to overcharge and causes leakage of the petroleum solvent housed inside, which may lead to firing.

In particular, when charging is performed with a plurality of cells housed in one case, a charging degree differs from cell to cell, and even if some of the plurality of cells are in a fully charged state (100%), a charging degree of the battery pack as a whole does not reach fully charged state (100%) unless other cells have been fully charged, and therefore, the charging operation will continue without halting. Hence, charging current passes through fully changed, which causes overcharge.

None of the conventional techniques described in the respective Patent Publications has any measures against overcharge caused by a different charging degree between the respective cells as described above, remaining the possibility of bursting the cells by overcharging.

Furthermore, in a secondary battery such as a lithium ion battery, if moisture is permeated into the battery, the lifetime thereof is remarkably shortened. In the conventional technique, cells are housed, one by one, in an enclosure made of a material having water impermeability such as an aluminum can and a laminated film and is tightly sealed so that no water invades from the outside. However, a permeable water amount differs depending upon sealing quality at every battery enclosure, which causes the housed cells to have a lifetime different from each other.

On the other hand, the conventional technique described in the Patent Publication 3 has proposed a solution of a problem concerning the lifetime by providing gas barrier performance for an outer case itself to prevent respective cells in a case from water invasion. However, the conventional technique in the Patent Publication 3, using a sheet-shaped member formed by laminating a plurality of types of raw materials as a case, causes the case itself to have poor rigidity, which cannot fully deal with an external impact or an internal fire accident.

### Disclosure of the Invention

The present invention was conceived in consideration of the foregoing problems, and it is an object of the present invention to provide a battery pack which is capable of monitoring voltages of respective cells from outside the case and which is excellent in strength against an impact and a fire accident.

To achieve the object, there is provided a battery pack according to the present invention including: a metal case; a plurality of cells connected to and arranged in the metal case in a manner sealed therefrom; a terminal attached to the metal case for taking out electric current from the cell to the outside of the case in a connected state; a wiring provided inside the metal case for taking out a voltage of each of the cells; and a cell voltage monitoring connector connected to the wiring and attached to the outside of the metal case.

Furthermore, according to the present invention, there is also provided a battery pack including: a metal case; a plurality of cells connected to and arranged in the metal case in a manner sealed therefrom; a terminal attached to the metal case for taking out electric current from the cell to the outside of the case in a connected state; a wiring provided inside the metal case for taking out a voltage of each of the cells; a voltage monitoring electronic circuit connected to the wiring and attached to the inside of the metal case; and an information transmitting/ receiving connector connected to the voltage monitoring electronic circuit and attached to the outside of the metal case.

The battery pack described above may be filled with inert gas such as nitrogen gas and argon gas, or a foam material such as urethane foam or styrene foam.

In addition, a plurality of columnar or plate-shaped cells may be connected in series.

The present invention allows voltages of respective cells to be monitored from outside the case, and therefore, the respective cells may be completely prevented from being overcharged. Use of a metal case as an outer case can remarkably improve the strength of the case and provides safety state against an external impact and burst even at an internal fire accident.

Further features of the present invention will be apparent from the following description of embodiments with reference to the accompanying drawings.

### Brief Description of the Drawings

FIG. 1 is a sectional view of a first embodiment of a battery pack according to the present invention.
FIG. 2 is a sectional view of a second embodiment of a battery pack according to the present invention.
FIG. 3 is an exploded perspective view illustrating a third embodiment of a battery pack according to the present invention. Best Mode for Carrying Out the Invention

Embodiments of the present invention will be described hereunder with reference to the accompanying drawings.

### (1) First embodiment

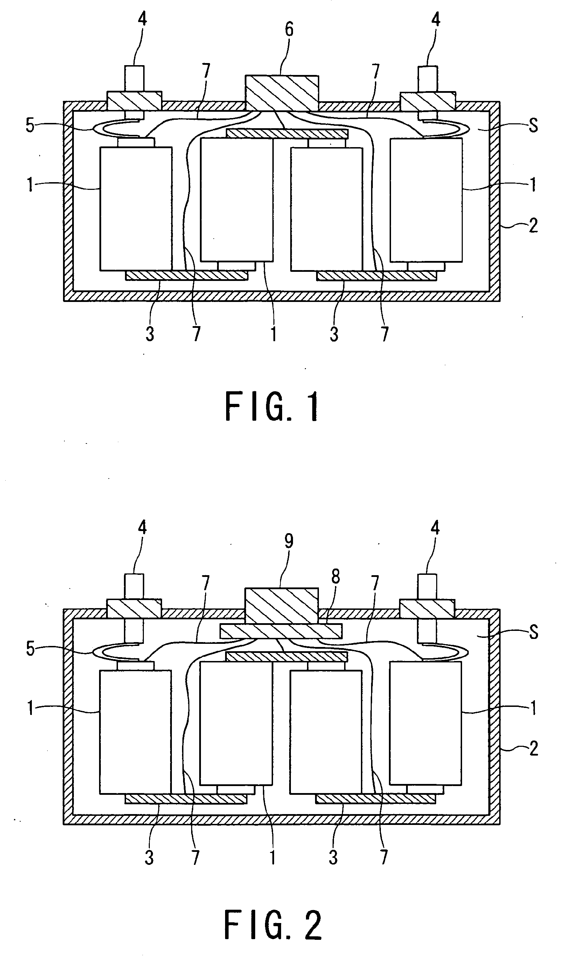

A first embodiment shown in FIG. 1 illustrates a basic configuration of the present invention. The embodiment is provided a plurality of cells, and a columnar cell, as each cell 1, having a positive (+) terminal and a negative (-) terminal at upper and lower ends thereof is used. The plurality of cells 1 are housed in an airtight and watertight metal case 2 of a press molded or cast article made of iron or aluminum.

The plurality of cells 1 are housed with the vertical orientation thereof alternately changed in the metal case 2, and one negative terminal thereof is connected to one positive terminal, respectively, through a connection member 3 for a serial electrical connection. The metal case 2 has positive-side and negative-side external terminals 4, and the external terminals 4 and terminals of the cells 1 are connected to each other through lead wires 5.

To the metal case 2, a voltage monitoring connector 6 is attached, and a voltage taking wire 7 extending from the positive side and the negative side of each cell 1 is connected to a contact point inside the metal case of the voltage monitoring connector 6.

A space S between the metal case 2 and the each cell 1 is filled with inert gas such as nitrogen gas or argon gas, or foam material such as urethane foam or styrene foam.

The first embodiment having such a configuration allows voltages of individual cells to be monitored by the connector 6 attached to the metal case 2, and therefore, charging of the battery pack as a whole is stopped when the charging degree of a certain cell has reached 100%, thereby preventing the cells from being overcharged.

Moreover, the present embodiment also has the features described below. Housing of the cells 1 in the rigid metal case 2 will cause no fire even if any cell bursts inside the metal case, thereby enhancing the safety. Especially, use of a metal case having high rigidity can further improve the protection function of a cell against an external impact than a technique of preventing water invasion with a composite sheet, as described in the Patent Publication 3, and a metal case can be manufactured more easily than a case where the composite sheet is used.

Filling a space between the metal case 2 and the respective cells 1 with inert gas as described above can improve fire resistance performance. In addition, filling with foam material such as urethane foam or styrene foam has the following advantages of preventing cell vibration in the metal case 2 as well as preventing leakage of petroleum solvent and water invasion from the outside.

### (2) Second Embodiment

While the first embodiment is configured so as to directly take out the voltages of respective cells 1 into a voltage monitoring connector 6, a second embodiment is configured so as to provide a voltage monitoring electronic circuit 8 in a metal case 2 to collect information concerning:
(a) a cell or cells under an overcharging state,

(b) availability of charging to battery pack,

(c) charging degree of each cell and

(d) battery lifetime,

Such information is taken out to the outside of the metal case 2 via an information communicating connector 9.

According to the second embodiment, an improved controlling of the charging time and the lifetime of the battery can be performed over the first embodiment because other information of each cell and the whole battery pack can be acquired by the connector 9 in addition to detection of voltage of each cell.

The other configurations or structures are the same as those in the first embodiment, and therefore, duplicated descriptions thereof are omitted herein.

### (3) Third Embodiment

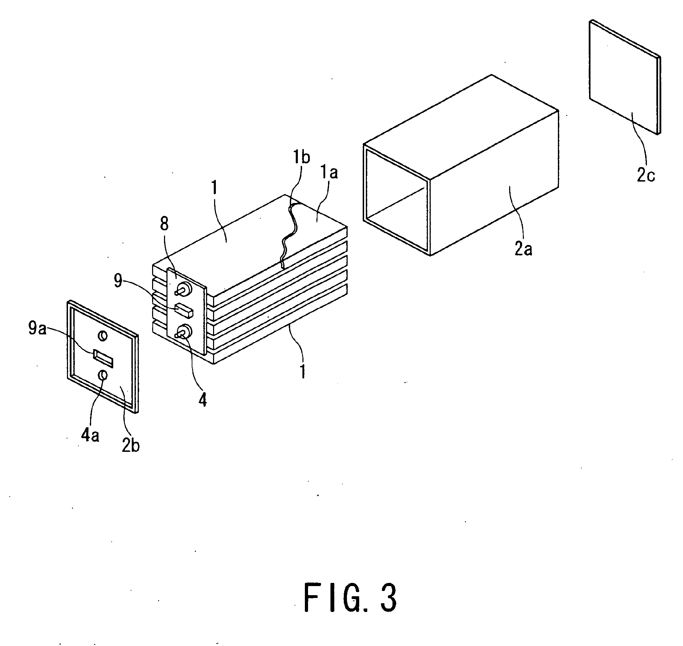

A third embodiment illustrated in FIG. 3 is configured to laminate and house a plurality of thin plate-like cells 1 in a metal case 2. In this case, each cell 1 has a structure to seal cell bodies 1a into a cover member 1b such as polyethylene, polypropylene, polyethylene terephthalate (PET), polycarbonate or acrylonitrile-butadiene-styrene (ABS), and a positive terminal and a negative terminal are drawn out of one side of the cover member 1b and electrically connected to each other by such means as crimping or welding.

At an end portion of the laminated cell 1, a monitoring electronic circuit 8 and a connector 9 for transmitting/ receiving information, and positive-side and negative-side external terminals 4 as illustrated in the second embodiment are integrally attached.

As a metal case 2, a box-like case constituted by a tubular case body 2a and lid plates 2b, 2c provided at the front and rear end of the case body 2a is used. In this case, the front lid plate 2b is formed with openings 9a and 4a for inserting the connector 9 and the external terminals 4, respectively. With the cells 1 in a laminated state inserted into the case body 2a, the cells 1 are sealed therein by screwing or fitting the front and rear lid plates 2b, 2c.

To ensure airtightness and watertightness of the metal case 2, a cover member may be arranged in a joint portion between the case body 2a and the front and rear lid plates 2b, 2c or a joint portion between the connector 9 or the external terminals 4 and the openings 9a, 4a.

The third embodiment of the structure mentioned above ensures high moisture impermeability with the external metal case 2 in addition to operations and effects of the respective embodiments, and therefore, even if covering of the cell 1 is prepared with insulation material having high formability and workability such as polyethylene, there is no fear of water invasion into the cell inside, thus preventing shortening of battery lifetime. Accordingly, a possibility of occurrence of a short-circuit accident becomes lower so as to enhance safety.

## Claims

1. A battery pack comprising:
a metal case;
a plurality of cells connected to and arranged in the metal case in a manner sealed therefrom;
a terminal attached to the metal case for taking out electric current from the cell to the outside of the case in the connected state;
a wiring provided inside the metal case for taking out a voltage of each of the cells; and
a cell voltage monitoring connector connected to the wiring and attached to the outside of the metal case.

2. A battery pack comprising:
a metal case;
a plurality of cells connected to and arranged in the metal case in a manner sealed therefrom;
a terminal attached to the metal case for taking out electric current from the cell to the outside of the case in the connected state;
a wiring provided inside the metal case for taking out a voltage of each of the cells;
a voltage monitoring electronic circuit connected to the wiring and attached to the inside of the metal case; and
an information transmitting/receiving connector connected to the voltage monitoring electronic circuit and attached to the outside of the metal case.

3. The battery pack according to claim 1 or 2, wherein a space inside the metal case is filled with an inert gas.

4. The battery pack according to claim 3, wherein the inert gas is nitrogen gas or argon gas.

5. The battery pack according to claim 1 or 2, wherein a space inside the metal case is filled with a foam material.

6. The battery pack according to claim 5, wherein the foam material is urethane foam or styrene foam.

7. The battery pack according to claim 1 or 2, wherein a plurality of cells is formed by connecting columnar cells in series.

8. The battery pack according to claim 1, wherein a plurality of cells is formed by plate-shaped cells in series in a laminated state.
